Europäisches Patentamt

European Patent Office

Office européen des brevets

(11) Numéro de publication: **0 083 461**
**A2**

## DEMANDE DE BREVET EUROPEEN

(21) Numéro de dépôt: **82201658.0**

(22) Date de dépôt: **24.12.82**

(51) Int. Cl.³: **B 05 B 7/04,** B 05 C 5/00

(30) Priorité: **06.01.82 FR 8200326**

(43) Date de publication de la demande: **13.07.83**
**Bulletin 83/28**

(84) Etats contractants désignés: **BE DE GB IT**

(71) Demandeur: **Etablissements G. PIVAUDRAN S.A.R.L.,
Rue de la Frégière, F-46200 Souillac (FR)**

(72) Inventeur: **Veyriere, Pierre, Saint-Sozy, F-46200 Souillac
(FR)**

(74) Mandataire: **Barre, Philippe, Cabinet Barre, Gatti,
Laforgue 95, rue des Amidonniers, F-31069 Toulouse
Cedex (FR)**

(54) **Dispositif de mélange et de distribution par doses d'un produit et application pour la distribution de colles, notamment à base de résine époxyde (1111111).**

(57)    L'invention concerne un dispositif de mélange et de distribution par doses d'un produit à un ou plusieurs composants.

Ce dispositif comprend une chambre de mélange 3 dans laquelle est monté libre un organe mélangeur de type statique 7 qui peut ainsi se déplacer à l'intérieur de la chambre 3 sur une course prédéterminée; cet organe est associé à des moyens de rappel 8 agencés pour le repousser dans le sens $S_2$ allant de la sortie vers les entrées de la chambre. L'organe 7, en se déplaçant au cours de la distribution du produit, permet de projeter des doses de celui-ci avec une grande précision et sans dispersion, tout en réalisant un mélange intime des composants dudit produit.

# 0083461

## DISPOSITIF DE MELANGE ET DE DISTRIBUTION PAR DOSES D'UN PRODUIT ET APPLICATION POUR LA DIS-TRIBUTION DE COLLES, NOTAMMENT A BASE DE RE-SINE EPOXYDE

L'invention concerne un dispositif de mélange et de distribution par doses d'un produit constitué notamment d'au moins deux composants ; elle s'applique en particulier pour préparer et distribuer des mélanges durcissants du type colles à base de résine époxyde ou analogue ; elle peut également s'appliquer pour d'autres types de mélanges et, le cas échéant, pour homogénéiser et distribuer un produit unique.

Dans de nombreux secteurs industriels, il est nécessaire de projeter de façon répétitive et avec une grande précision, des doses de colle parfois très faibles sur des éléments à coller. Cette opération s'accompagne de difficultés bien connues des spécialistes, pour obtenir, à la fois, un bon mélange des composants donnant une colle de qualité satisfaisante et une distribution suffisamment précise pour éviter de souiller les parties avoisinantes des parties à encoller ; en outre, il est essentiel que le dispositif de mélange et de distribution puisse être aisément et rapidement nettoyé entre les périodes d'utilisation afin d'éviter un durcissement de la colle in situ et une obstruction des divers organes du dispositif.

Les dispositifs existant actuellement sont essentiellement de deux types : des dispositifs dynamiques comprenant un organe mélangeur entraîné en rotation par un moteur pour assurer le mélange, et des dispositifs statiques dans lesquels l'organe mélangeur est fixe, le mélange s'effectuant par laminage lors du passage du produit au niveau de cet organe fixe.

Les dispositifs dynamiques sont de structure complexe et posent des problèmes difficiles à résoudre pour assurer une transmission du mouvement à l'organe mélangeur tout en garantissant l'étanchéité de la chambre qui contient cet organe ; en effet, cette chambre est remplie du mélange durcissant et ce dernier a tendance à s'accumuler, et à adhérer et durcir au niveau des joints qui perdent rapidement leurs qualités.

**0083461**

Les dispositifs statiques sont beaucoup plus simples et ne posent pas des problèmes d'étanchéité aussi aigüs que ceux ci-dessus évoqués. Toutefois, les dispositifs statiques connus actuellement sont inaptes à permettre, à la fois, l'obtention d'un bon mélange et d'une bonne précision de distribution. En effet, du fait de leur principe de fonctionnement par laminage, les organes mélangeurs fixes introduisent une perte de charge importante au passage du produit, le mélange étant d'autant mieux réalisé que la perte de charge est élevée ; dans ces conditions, dans les dispositifs connus, la pression de distribution en aval de la chambre de mélange est trop faible pour obtenir une projection précise du produit à la sortie de l'orifice d'éjection.

La présente invention vise un dispositif de type statique et se propose de remédier aux défauts de ce type de dispositif tout en conservant les qualités et avantages de ceux-ci (simplicité de structure, problèmes d'étanchéité plus faciles à résoudre, nettoyage plus facile).

Un objectif essentiel de l'invention est en particulier de fournir un dispositif doté d'un organe mélangeur de type statique, dispositif qui soit apte, d'une part, à réaliser un mélange intime des composants de base, d'autre part, à projeter des doses de ce mélange sur une cible avec une grande précision, sans dispersion ni aspersion des parties avoisinantes.

Un autre objectif est de fournir un dispositif susceptible de distribuer, dans les conditions précitées, des doses constituées de très faibles quantités de produit, notamment des doses inférieures à environ 1 gramme.

Un autre objectif est de fournir un dispositif particulièrement facile à nettoyer entre les périodes d'utilisation.

Un autre objectif est d'améliorer notablement la qualité du mélange réalisé dans le dispositif, tout en conservant la précision de projection et les facilités de nettoyage sus-évoquées.

Un autre objectif est de fournir un dispositif tout particulièrement adapté à la distribution de colles, notamment de colles durcissantes à base de résine époxyde. évoquée

Dans le cadre de l'application ci-dessus, l'invention vise également à supprimer la formation des fils ou fines bavures qui ont tendance à apparaître à l'orifice d'éjection après la distribution de chaque dose de colle, ces fils ou bavures étant susceptibles de réduire la précision de distribution de la dose suivante.

Un autre objectif, dans le cadre de cette même application, est d'apporter une solution satisfaisante aux problèmes d'étanchéité posés par la présence d'un mélange collant et durcissant.

A cet effet, le dispositif de mélange et de distribution, par doses, visé par l'invention est du type comprenant une chambre d'admission de chaque composant, des moyens d'alimentation de chaque chambre d'admission au moyen du composant considéré, une chambre de mélange possédant, d'un côté, des entrées reliées aux chambres d'admission et, de l'autre, une sortie de mélange, des moyens de mise en pression agencés pour permettre d'établir une pression prédéterminée au niveau des entrées de la chambre de mélange, un organe mélangeur de type statique disposé à l'intérieur de la chambre de mélange entre ses entrées et sa sortie, une buse d'éjection communiquant avec la sortie de la chambre de mélange et pourvue d'au moins un orifice d'éjection de produit, un organe obturateur associé à ladite buse pour permettre d'en obturer ou d'en ouvrir le ou les orifices d'éjection, et des moyens de commande de l'organe obturateur adaptés pour manoeuvrer ce dernier pour chaque dose de produit à distribuer, afin d'ouvrir le ou les orifices d'éjection pendant un laps de temps correspondant à la sortie de ladite dose. Conformément à la présente invention, l'organe mélangeur est monté libre dans la chambre de mélange de façon à pouvoir se déplacer à l'intérieur de celle-ci sur une course prédéterminée, et est associé à des moyens de rappel agencés pour le repousser dans le sens $(S_2)$ allant de la sortie vers les entrées de la chambre de mélange, lesdits moyens de rappel étant adaptés pour laisser à l'organe mélangeur la faculté de se déplacer dans le sens opposé $(S_1)$ sous l'effet des pressions différentielles s'exerçant sur ledit organe lorsque le ou les orifices d'éjection sont ouverts.

Les moyens de rappel sus-évoqués peuvent être constitués par un organe élastique dont le module d'élasticité possède une valeur telle que :

. d'une part, ledit organe élastique soit apte à vaincre les forces de viscosité et à rappeler l'organe mélangeur vers les entrées de la chambre de mélange lorsqu'une pression sensiblement uniforme est établie dans celle-ci,

. d'autre part, cet organe joue élastiquement et autorise le déplacement de l'organe mélangeur lorsque celui-ci est soumis aux pressions différentielles provoquées par l'ouverture de l'orifice d'éjection de la buse.

Ainsi, comme on le comprendra mieux plus loin, le dispositif de l'invention permet, à la fois, de réaliser un mélange de bonne qualité des composants de base et de projeter le produit obtenu avec une bonne précision sur les éléments à encoller. Le processus de fonctionnement du dispositif est en effet le suivant :

Après distribution d'une dose, l'orifice d'éjection est refermé par l'organe d'obturation et, sous l'influence des moyens de mise en pression, la chambre de mélange et la buse sont remises en pression : la buse étant fermée, la pression du produit s'équilibre statiquement depuis les entrées de la chambre de mélange jusqu'à l'orifice d'éjection,jusqu'à atteindre une valeur constante dans tout le volume,correspondant à celle exercée par les moyens de mise en pression et ce, quelle que soit la perte de charge introduite par l'organe mélangeur. Ce dernier qui avait été repoussé en direction de la sortie de mélange lors de la distribution précédente, est rappelé en direction des entrées par lesmoyens de rappel lorsque les différences de pression s'exerçant sur celui-ci ont disparu ; au passage, le produit subit un laminage dont l'efficacité n'est     limitée par aucune contrainte, l'organe mélangeur pouvant être réalisé dans chaque application pour fournir un mélange de qualité optimale.

Lorsque l'orifice d'éjection est ouvert pour la distribution d'une nouvelle dose, l'éjection s'amorce et crée une baisse de pression à l'intérieur de la buse ; toutefois, cette baisse de pression est limitée par l'élasticité des moyens de rappel: en effet, ceux-ci s'escamotent sous l'effet de la différence de pression à laquelle est soumise l'organe mélangeur et ce dernier est amené à se déplacer vers l'aval de la chambre de mélange (côté sortie du mélange), ce qui a pour effet de stabiliser la pression dans la buse. Cette valeur d'équilibre transitoire qui dépend, d'une part, de la pression conférée par les moyens de mise en pression, d'autre part, du module d'élasticité des moyens de rappel, peut être ajustée en fonction de chaque application à un niveau suffisamment élevé pour engendrer une projection précise du produit sur la cible à atteindre. Il est à noter que le déplacement de l'organe mélangeur /s'accompagne/ d'un appel de produits depuis les chambres d'admission vers la partie amont de la chambre de mélange (située du côté des entrées) et, après refermeture de la buse, un nouveau cycle tel que ci-dessus décrit peut commencer.

Par ailleurs, selon une autre caractéristique de l'invention, l'organe mélangeur est de préférence agencé dans la chambre de mélange de façon à pouvoir se déplacer sur une course correspondant à un volume libre de ladite chambre au moins égal au volume maximum $V_m$ des doses à distribuer. On évite ainsi une baisse de pression dans la buse en fin de distribution d'une dose et la totalité de la dose est projetée avec une pression élevée à peu près constante : en conséquence, la précision de projection est maintenue pendant toute la distribution.

La chambre de mélange présente généralement une forme allongée, l'organe mélangeur lui-même de forme allongée étant adapté pour réaliser un laminage des produits entre sa face externe et la face interne de la chambre de mélange. En particulier, la chambre de mélange peut être de forme cylindrique et l'organe mélangeur constitué par un cylindre possédant une longueur et un diamètre respectivement inférieurs à la longueur et au diamètre interne de la chambre de mélange et pourvu sur sa surface d'au moins une nervure hélicoïdale de diamètre externe légèrement inférieur au diamètre intérieur de la chambre, de façon à soumettre le produit lors de son passage, à des actions combinées de laminage longitudinal et de laminage rotatif.

Par une combinaison de ces deux types de laminage, on atteint une grande efficacité de mélange des composants du produit, tout en ayant un organe mélangeur de longueur modérée facilitant grandement les nettoyages et réduisant l'encombrement du dispositif.

L'invention peut s'appliquer pour préparer et distribuer par doses tout produit constitué de plusieurs composants, au nombre de deux, trois ou même davantage. Elle peut également s'appliquer, le cas échéant, pour homogénéiser et distribuer par doses un produit unique.

Dans le cas d'une colle à deux composants du type résine époxyde et catalyseur , on a pu constater que de bons résultats étaient obtenus, à faible température, en utilisant des moyens de mise en pression aptes à établir dans la chambre du mélange une pression très approximativement comprise entre 100 et 300 bars.

L'invention ayant été exposée dans sa forme générale, d'autres caractéristiques, buts et avantages de celle-ci se dégageront de la description qui suit, en référence aux dessins annexés qui en présentent, à titre d'exemple non limitatif, un mode de réalisation ; sur ces dessins qui font partie intégrante de la présente description :

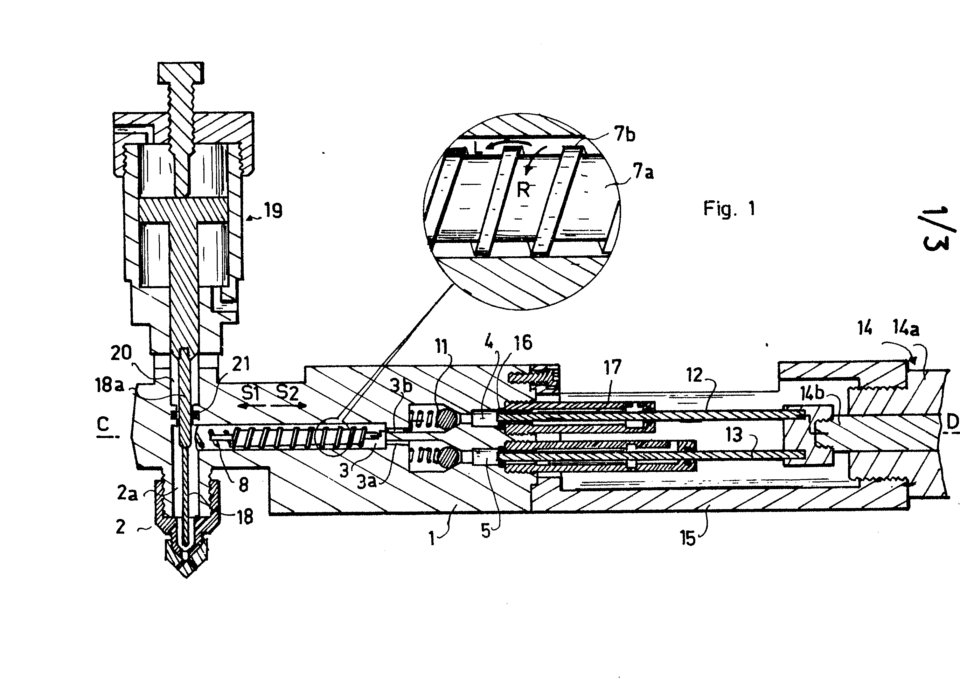

. la figure 1 est une coupe schématique selon une ligne brisée AB de ce mode de réalisation,

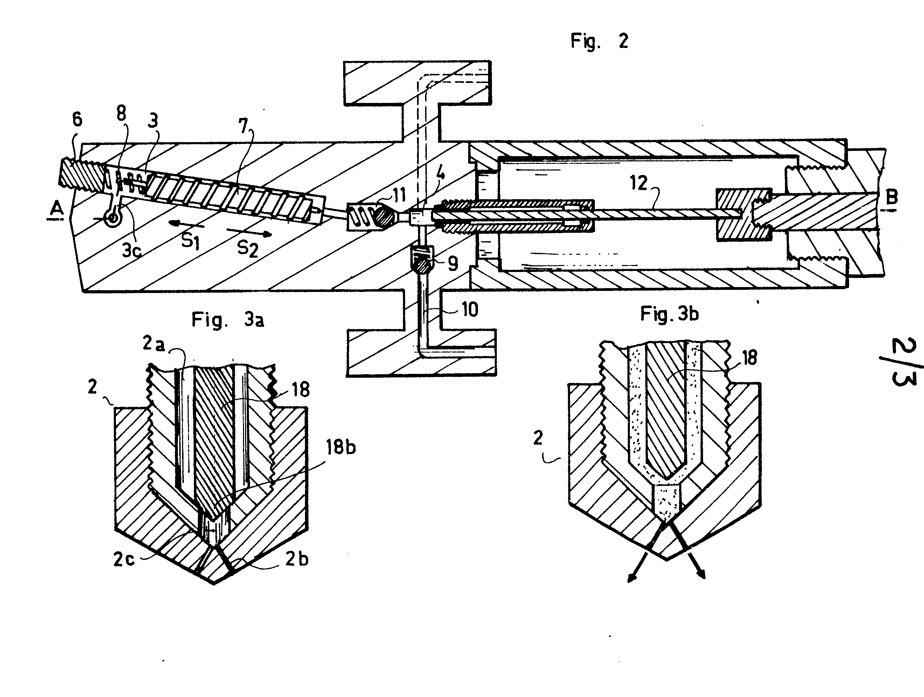

. la figure 2 en est une coupe schématique selon une autre ligne brisée CD,

. les figures 3a et 3b sont des vues de détail d'un des organes du dispositif,

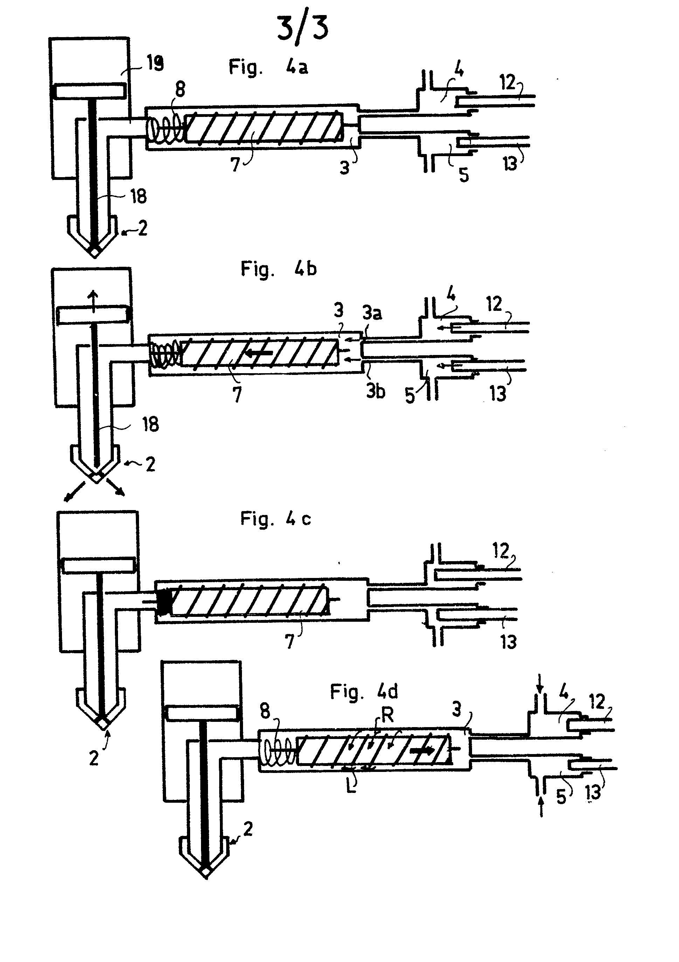

. les figures 4a, 4b, 4c et 4d sont des schémas illustrant le fonctionnement du dispositif.

Le dispositif représenté à titre d'exemple aux figures se présente sous la forme d'un pistolet d'encollage, apte à projeter de façon extrêmement précise de petites doses de colle à base de résine époxyde, de poids de l'ordre de 0,1 à 0,5 g.

Ce dispositif comprend un corps 1 dans lequel est réalisé le mélange  des composants (en l'exemple : résine époxyde et catalyseur) et une buse 2 solidarisée au corps 1 en vue de l'éjection des doses de mélange.

Ce corps 1 comprend un alésage borgne cylindrique 3 qui forme une chambre de mélange des composants. Cette chambre 3 communique par deux entrées 3a et 3b avec deux chambres d'admission des composants 4 et 5, cependant que son autre extrémité qui débouche en bout du corps, est fermée dans le prolongement de la chambre par un bouchon amovible 6 et est pourvue d'une sortie latérale de mélange 3c.

La chambre 3 contient un organe mélangeur 7 qui est constitué par un cylindre 7a plus court que la chambre et de diamètre inférieur à celle-ci ; ce cylindre peut ainsi se déplacer longitudinalement dans la chambre sur une course définissant un volume balayé supérieur au volume des doses à distribuer. Le cylindre 7a porte sur sa surface externe une nervure hélicoïdale 7b dont le diamètre externe est légèrement inférieur à l'alésage de la chambre. En l'exemple, l'alésage de la chambre de mélange 3 peut être d'environ 10 mm, le diamètre du cylindre 7a d'environ 8,65 mm et le diamètre externe de la nervure 7b d'environ 9,9 mm.

L'organe mélangeur 7 est soumis à une force de rappel développée par un ressort 8 placé dans la partie aval de la chambre 3 et ayant en l'exemple une valeur approximativement/ de l'ordre de 3 à 4 kg . Ce ressort sollicite l'organe mélangeur dans le sens allant de l'aval vers l'amont de la chambre de mélange 3 (sens allant de la sortie 3c vers les entrées 3a et 3b).

Le bouchon amovible 6 qui ferme la chambre à son extrémité aval est situé dans le prolongement de celle-ci et possède un diamètre au moins égal au propre diamètre de la chambre, de façon à permettre d'extraire aisément l'organe mélangeur 7 et le ressort 8 lors des nettoyages.

Par ailleurs, chaque chambre d'admission 4 ou 5 située en amont de la chambre de mélange 3 est reliée à des moyens d'alimentation d'un des composants (en l'exemple résine époxyde ou catalyseur) avec interposition d'un clapet tel que 9, agencé pour interdire un retour du composant vers lesdits moyens d'alimentation. Ces moyens sont constitués, pour

chaque composant, par un canal d'alimentation latéral 10 qui est connecté à un réservoir de composant (non représenté) sous pression modérée (quelques bars).

En aval, chaque chambre d'admission 4 ou 5 est dotée d'un clapet tel que 11, agencé pour interdire un retour de produit depuis la chambre de mélange 3.

De plus, dans chaque chambre d'admission 4 ou 5, pénètre une tige mobile de mise en pression 12 ou 13 ; ces tiges 12 et 13 sont liées à un organe mobile 14b de vérin 14, ayant un piston de section très supérieure à celle desdites tiges en vue d'engendrer un effet multiplicateur de pression. On aperçoit à la figure 1 l'extrémité 14a du corps de vérin 14, qui est solidarisé à un support de vérin 15, assujetti au corps 1 du dispositif. En l'exemple, les tiges 12 et 13 et vérin 14 sont adaptés pour permettre d'établir dans chaque chambre d'admission 4 et 5, une pression de l'ordre de 200 bars.

En outre, des joints toriques d'étanchéité tels que 16 sont prévus à l'arrière des chambres d'admission 4 et 5 pour assurer l'étanchéité autour des tiges 12 et 13 ; il est à noter qu'au niveau des chambres d'admission, les composants ne sont pas encore mélangés et n'ont donc aucune tendance à durcir de sorte que les joints assurent l'étanchéité dans des conditions satisfaisantes ; toutefois, pour accroître leur durée de vie et écarter rigoureusement tout defaut d'étanchéité, il est avantageux de prévoir à l'arrière des joints 16, de petits réservoirs de lubrifiants tels que 17 que traversent les tiges 12 et 13.

Par ailleurs, à son extrémité aval, la chambre de mélange 3 communique avec le canal interne 2a de la buse 2, par une sortie 3c positionnée latéralement par rapport à la direction longitudinale de ladite chambre de mélange.

Le canal interne 2a débouche à l'extrémité basse de la buse par un ou plusieurs orifices d'éjection de faible diamètre tels que 2b (en l'exemple au nombre de deux), qui peuvent être obturés par une aiguille mobile 18. Ladite aiguille est mue par sa portion haute 18a au moyen d'un vérin pneumatique à double effet 19 qui permet de la soulever pour ouvrir les orifices d'éjection 2b ou, au contraire, de l'abaisser pour obturer ceux-ci.

La portion haute 18a de l'aiguille traverse un petit réservoir 20 de fluide lubrifiant, notamment d'huile silicone, de nature adaptée pour éviter l'adhérence du mélange sur l'aiguille. Le canal interne 2a de la buse et ce réservoir 20 sont étanchément séparés l'un de l'autre par un joint torique d'étanchéité 21 ; grâce à la présence permanente du lubrifiant dans le réservoir 20, la portion de l'aiguille venant en contact avec le joint 21 se trouve sans cesse lubrifiée au cours des mouvements de va et vient : on supprime ainsi les dépôts de produits durcis sur cette portion d'aiguille ce qui réduit considérablement les risques de détériorations et d'usure prématurée du joint 21. L'étanchéité réalisée est d'excellente qualité et se maintient au cours du temps.

Par ailleurs, comme l'illustrent les figures 3a et 3b, une petite chambre-tampon 2c est disposée entre les orifices d'éjection 2b et le canal interne 2a de la buse. L'aiguille 18 comporte une extrémité d'obturation 18b de forme conique qui est adaptée pour venir en appui sur un siège, de forme conjuguée, qui est prévu à l'entrée de la chambre-tampon 2c.

Ainsi, l'aiguille obture les orifices d'éjection en amont de la chambre-tampon 2c et, comme l'ont démontré les essais, cette disposition a pour effet d'éliminer ou de réduire considérablement la formation des fils et bavures qui, apparaissant en fin de distribution d'une dose de colle, risquent de détruire la précision de  projection de la dose suivante. Il semble que la quantité de colle qui est contenue dans la chambre 2c forme un tampon éliminant ou réduisant les phénomènes de retrait qui se développent au niveau des orifices de projection lorsque l'aiguille ferme directement ces orifices.

Par ailleurs, le dispositif conforme à l'invention est complété, comme cela est connu en soi, par un circuit de fluide chaud (non représenté) qui parcourt le corps 1 et passe à proximité des chambres d'admission 4 et 5 et chambre de mélange 3 ; de plus, le dispositif comporte des entrées de liquide de nettoyage et entrées d'air sous pression, qui permettent, pendant les périodes de nettoyage (après fermeture des réservoirs d'alimentation en composants) de délivrer ces fluides dans tous les organes qui ont été en contact avec les composants ou avec le mélange.

Le fonctionnement du dispositif est illustré schématiquement aux figures 4a, 4b, 4c et 4d.

Dans le cas d'une colle à base de résine époxyde, les composants, résine époxyde et catalyseur, peuvent arriver à une température de 45°C environ, le circuit de fluide chaud étant parcouru par un liquide chauffé à 45°C environ pour être capable de maintenir le mélange à cette température.

Un cycle de fonctionnement est décrit ci-après, en supposant qu'au début de celui-ci, le dispositif se trouve dans l'état de la figure 4a. La buse 2 est fermée et l'organe mélangeur 7 est disposé vers l'amont sous l'effet de l'action du ressort 8. Une pression statique uniforme d'environ 200 bars règne dans les chambres d'admission 4, 5, dans la chambre de mélange 3 et dans la buse 2. Cette pression est établie par les tiges 12 et 13 qui pressent sur les composants ; ces composants étant pratiquement incompressibles, ces tiges 12 et 13 se trouvent au voisinage de leur position arrière.

A un instant donné, le vérin pneumatique 19 relève l'aiguille 18 et ouvre la buse 2 ; sous l'effet de la pression élevée, la projection de colle s'amorce et est dirigée avec une grande précision le long des axes des 2 orifices de projection,sans dispersion notable autour de ces directions. La valeur de la pression dans la buse 2 a tendance à s'abaisser, tout en conservant une valeur élevée compte-tenu de la valeur de la pression initiale (supérieure à 150 bars). L'or-gane mélangeur 7 est soumis /alors/ à une pression différentielle qui comp.ense les forces de rappel et engendre le déplacement de cet organe vers l'aval (figure 4b).

Bien entendu, l'ensemble des phénomènes ci-dessus décrits se déroulent en un temps extrêmement court. Au cours du mouvement de l'organe mélangeur 7, la pression se stabilise dans la buse 2 et la projection de colle se poursuit et s'achève à pression élevée, cependant qu'un appel de composants s'opère par les entrées 3a, 3b de la chambre de mélange (les tiges 12 et 13 avançant simultanément à l'écoulement des composants et maintenant la pression de 200 bars au niveau des chambres d'admission 4 et 5 et des entrées de la chambre de mélange 3).

A l'instant où la buse 2 se referme après projection de toute la dose de colle (figure 4c), l'organe mélangeur 7 se trouve au voisinage de sa position avant et a balayé au cours de son déplacement, un volume égal à celui de la dose distribuée, évitant une chute de pression au niveau de la buse 2 : la dose de colle a ainsi été entièrement distribuée à pression élevée.

Une fois la buse 2 refermée, les tiges 12 et 13 sont déplacées vers l'arrière, engendrant un appel de composants depuis les réservoirs d'alimentation vers les chambres d'admission 4 et 5 ; le vérin 14 est ensuite remis en pression pour établir à nouveau la pression élevée de 200 bars au niveau des chambres d'admission 4 et 5 et des entrées 3a, 3b de la chambre de mélange 3, cette pression statique se stabilisant quasi-instantanément dans toute la chambre de mélange 3 et dans la buse 2.

L'organe mélangeur 7 n'est plus soumis qu'à la force de rappel du ressort 8 et recule vers l'arrière (figure 4d) ; au passage, il réalise un double laminage du produit, d'une part, un laminage longitudinal L entre le bord externe de la nervure hélicoïdale 7b et la paroi de la chambre 3, d'autre part, un laminage rotatif R dans l'espace délimité entre les spires hélicoïdales. Ce double laminage produit une action de mélange extrêmement efficace, de sorte qu'un organe mélangeur relativement court (ayant une longueur de l'ordre de 7 à 8 cm dans l'exemple décrit) est apte à fournir à la sortie 3c de la chambre de mélange, un produit homogène constituant une colle de très bonne qualité.

Un cycle de nettoyage est opéré à la fin de chaque période d'utilisation. Après dévissage du bouchon 6, l'organe mélangeur 7 peut aisément être retiré pour être nettoyé à part ; son retrait facilite la circulation du liquide de nettoyage dans l'ensemble du dispositif.

Bien entendu, l'invention n'est pas limitée aux termes de la description qui précède mais en comprend toutes

12

0083461

les variantes. En particulier, pour un dispositif appelé à être utilisé en position fixe, la force de rappel exercée sur l'organe mélangeur pourrait être gravitationnelle, la chambre de mélange étant prévue verticale ou fortement inclinée avec un organe mélangeur de poids approprié..

13

0083461

REVENDICATIONS.

1/ - Dispositif de mélange et de distribution par doses d'un produit constitué d'au moins un composant, du type comprenant une chambre d'admission de chaque composant (4, 5), des moyens d'alimentation de chaque chambre d'admission au moyen du composant considéré, une chambre de mélange (3) possédant, d'un côté, des entrées (3a, 3b) reliées aux chambres d'admission et, de l'autre, une sortie de mélange (3c), des moyens de mise en pression (12, 13, 14) agencés pour permettre d'établir une pression prédéterminée au niveau des entrées de la chambre de mélange, un organe mélangeur de type statique (7), disposé à l'intérieur de la chambre de mélange (3) entre ses entrées et sa sortie, une buse d'éjection (2) communiquant avec la sortie de la chambre de mélange et pourvue d'au moins un orifice d'éjection (2b) de produit, un organe obturateur (18) associé à ladite buse (2) pour permettre d'en obturer ou d'en ouvrir le ou les orifices d'éjection, et des moyens de commande de l'organe obturateur (19) adaptés pour manoeuvrer ce dernier pour chaque dose de produit à distribuer, afin d'ouvrir le ou les orifices d'éjection pendant un laps de temps correspondant à la sortie de ladite dose, ledit dispositif de distribution étant caractérisé en ce que l'organe mélangeur (7) est monté libre dans la chambre de mélange (3) de façon à pouvoir se déplacer à l'intérieur de celle-ci sur une course prédéterminée, et est associé à des moyens de rappel (8) agencés pour le repousser dans le sens ($S_2$) allant de la sortie (3c) vers les entrées (3a, 3b) de la chambre de mélange (3), lesdits moyens de rappel (8) étant adaptés pour laisser à l'organe mélangeur (7) la faculté de se déplacer dans le sens opposé ($S_1$) sous l'effet des pressions différentielles s'exerçant sur ledit organe lorsque le ou les orifices d'éjection (2b) sont ouverts.

2/ - Dispositif de mélange et de distribution selon la revendication 1, caractérisé en ce que l'organe mélangeur (7) est agencé dans la chambre de mélange (3), de façon à pouvoir se déplacer sur une course correspondant à un volume libre de ladite chambre au moins égal au volume maximum $V_m$ des doses à distribuer.

14

0083461

3/ - Dispositif de mélange et de distribution selon l'une des revendications 1 ou 2, dans lequel la chambre de mélange (3) présente une forme allongée, caractérisé en ce que l'organe mélangeur (7) présente une forme allongée adaptée pour réaliser un laminage des produits entre sa face externe et la face interne de la chambre de mélange.

4/ - Dispositif de mélange et de distribution selon la revendication 3, dans lequel la chambre de mélange (3) présente une forme cylindrique, caractérisé en ce que l'organe mélangeur (7) est constitué par un cylindre (7a) possédant une longueur et un diamètre respectivement inférieurs à la longueur et au diamètre interne de la chambre de mélange (3) et pourvu sur sa surface d'au moins une nervure hélicoïdale (7b) de diamètre externe légèrement inférieur au diamètre intérieur de la chambre (3), de façon à soumettre le produit lors de son passage, à des actions combinées de laminage longitudinal (L) et de laminage rotatif (R).

5/ - Dispositif de mélange et de distribution selon l'une des revendications 1, 2, 3 ou 4, caractérisé en ce que les moyens de rappel associés à l'organe mélangeur (7) comprennent un organe élastique (8) disposé dans la chambre de mélange (3) pour agir sur l'organe mélangeur, ledit organe élastique étant adapté :

. d'une part, pour vaincre les forces de viscosité et rappeler l'organe mélangeur (7) vers les entrées (3a, 3b) de la chambre de mélange (3) lorsqu'une pression sensiblement uniforme est établie dans celle-ci,

. d'autre part, pour jouer élastiquement et autoriser un déplacement de l'organe mélangeur (7) lorsque celui-ci est soumis aux pressions différentielles provoquées par l'ouverture du ou des orifices d'éjection (2b) de la buse.

6/ - Dispositif de mélange et de distribution selon l'une des revendications 1, 2, 3, 4 ou 5, dans lequel l'organe obturateur est constitué par une aiguille mobile (18) disposée dans un canal interne (2a) de la buse, lequel communique avec la sortie (3c) de la chambre de mélange, ladite aiguille (18) comportant une extrémité d'obturation (18b) située en regard du ou des orifices d'éjection (2b) et une por-

0083461

tion opposée (18a) en vue de sa manoeuvre dans un mouvement de va et vient longitudinal à l'intérieur du canal (2a), ledit dispositif étant caractérisé en ce qu'il comporte un petit réservoir (20) contenant un fluide lubrifiant adapté pour éviter l'adhérence du mélange sur l'aiguille, ledit réservoir étant traversé par la portion (18a) de l'aiguille et séparé du canal (2a) par un joint d'étanchéïté (21).

7/ - Dispositif de mélange et de distribution selon l'une des revendications 1, 2, 3, 4, 5 ou 6, dans lequel l'organe obturateur est constitué par une aiguille mobile (18) disposée dans un canal interne (2a) de la buse, lequel communique avec la sortie (3c) de la chambre de mélange, ledit dispositif étant caractérisé en ce que le canal interne (2a) débouche à l'extérieur de la buse par au moins un orifice d'éjection (2b) de faible diamètre, précédé d'une petite chambre-tampon (2c), l'aiguille (18) étant agencée pour obturer le ou lesdits orifices (2b) en amont de ladite chambre-tampon (2c).

8/ - Dispositif de mélange et de distribution selon l'une des revendications 1, 2, 3, 4, 5, 6 ou 7, dans lequel la chambre de mélange (3) est formée par un alésage borgne cylindrique, caractérisé en ce que ladite chambre de mélange (3) est fermée par un bouchon amovible (6), situé dans le prolongement de celle-ci et de diamètre au moins égal à son propre diamètre, la sortie de mélange (3c) (ou les entrées des composants 3a, 3b) située(s) du côté dudit bouchon (6) étant positionnée(s) latéralement par rapport à la direction longitudinale de ladite chambre (3).

9/ - Dispositif de mélange et de distribution selon l'une des revendications 1, 2, 3, 4, 5, 6, 7 ou 8, caractérisé en ce que les moyens de mise en pression comprennent des tiges mobiles (12, 13) pénétrant dans les chambres d'admission (4, 5) et liées à un organe mobile de vérin (14) ayant un piston de section très supérieure à celle desdites tiges en vue d'engendrer un effet multiplicateur de pression, chaque chambre d'admission (4, 5) comportant, en amont, un clapet (9) agencé pour interdire un retour du composant vers les moyens d'alimentation, et, en aval, un clapet (11) agencé pour interdire un retour de produit depuis la chambre de mélange (3).

10/ - Dispositif de mélange et de distribution selon l'une des revendications précédentes, comprenant un circuit de fluide chaud, passant à proximité des chambres d'admission (4, 5) et chambre de mélange (3).

11/ - Application du dispositif conforme à l'une des revendications précédentes pour distribuer, par doses, une colle constituée d'au moins deux composants.

12/ - Application selon la revendication 11 pour la distribution d'une colle à deux composants du type résine époxyde et catalyseur, caractériséeen ce que les moyens de mise en pression (12, 13, 14) sont adaptés pour permettre d'établir dans la chambre de mélange une pression très approximativement comprise entre 100 et 300 bars.

1/3

Fig. 1

Fig. 2

Fig. 3b

Fig. 3a

Fig. 4a

Fig. 4b

Fig. 4 c

Fig. 4d